# EUROPEAN PATENT APPLICATION

(11) **EP 2 709 024 A1**
(43) Date of publication of application: **19.03.2014**
(21) Application number: 13183046.5
(22) Date of filing: 04.09.2013
(51) Int. Cl.: G06F 17/30

(54) **Web searching method, system, and apparatus**

(30) Priority: 14.09.2012 TW 101133596
(71) Applicant: Hon Hai Precision Industry Co., Ltd., New Taipei City (TW)
(72) Inventor: Lee, Chung-I, New Taipei (TW); Yeh, Chien-Fa, New Taipei (TW); Liu, Yue-Cen, New Taipei (TW); Lu, Gen-Chi, New Taipei (TW)
(74) Representative: Gray, John James

(57) **Abstract**

In a web searching method, first web pages are selected from a search result according to a keyword inputted by a user (S02). Phrases in the first web pages are identified, and weightings of the phrases are computed (S03). Phrases having higher weightings are selected (S04). Related users previously requesting web pages related to the keyword are obtained and selected (S05). Second web pages which were actually browsed by selected related users are obtained from the search result of the keyword, and phrases in the second web pages identified (S06). Phrase intersections between the phrases from the second web pages and selected phrases from the first web pages are computed to realize an evaluation value of the selected related user (S07). A help page showing searching histories of the related users is also displayed (S09).

## Description

### Field

Embodiments of the present disclosure relate to query processing, and more specifically relates to techniques for searching web pages.

### BackGround

People seeking information usually search the Internet using a web browser. One typically begin his/her search for information by pointing his/her web browser at a website associated with a search engine. The search engine allows a user to request web pages containing information related to a particular search term or phrase.

Although the search terms and phrases may be used by the search engine to guide the information search, finding target web pages being sought from hundreds or even thousands of web pages by users is challenging.

### Summary

According to one aspect of the disclosure, a web searching method is provided. The web searching method includes obtaining a keyword inputted into a search engine by a user selecting first web pages from a search result including a plurality of web pages related to the keyword returned by the search engine; identifying phrases appearing in the first web pages, and computing a weighting of each of the phrases in the first web pages; ranking the identified phrases according to the weights, and selecting one or more of the phrases which have higher weights; obtaining related users who have previously requested web pages related to the keyword using the search engine; selecting one of the related users in turn, obtaining second web pages which the selected related user has previously browsed from the search result returned according to the keyword; identifying phrases appearing in the second web pages, computing a phrase intersection between the phrases from the second web pages and selected phrases from the first web pages, computing a number of the phrases in the phrase intersection, and computing an evaluation value of the selected related user according to the number of the selected phrases and the number of the phrases in the phrase intersection; and presenting a help page which shows searching histories of the related users who have higher evaluation values.

### BRIEF DESCRIPTION OF THE DRAWINGS

Embodiments of the invention are described, by way of example only, with reference to the accompanying drawings, in which:

FIG. 1 is a block diagram of one embodiment of a network environment for executing web searching method.

FIG. 2 is a block diagram of one embodiment of an apparatus that executes the web searching method.

FIG. 3 illustrates a flowchart of one embodiment of the web searching method.

FIG. 4 is an example illustrating a help page which shows search histories of related users.

### DETAILED DESCRIPTION

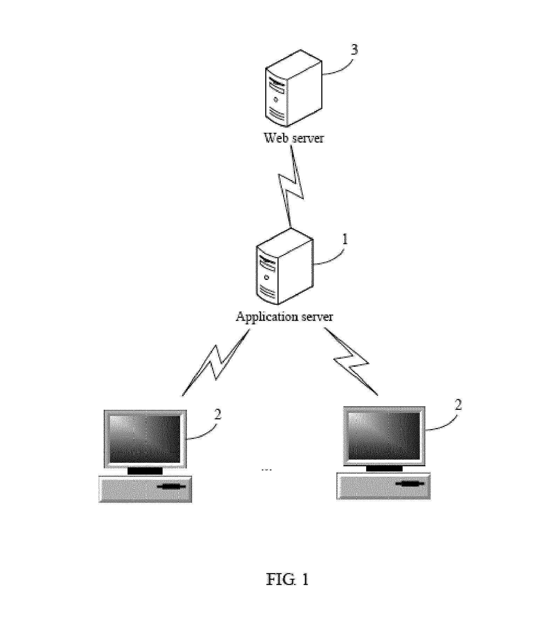

FIG. 1 is a block diagram of one embodiment of a network environment for executing web searching method. The network environment is constituted by an application server 1, a plurality of client devices 2, and a web server 3. The applicant server 1 is an apparatus that executes a web searching method. In another embodiment, the web server 3 can be used as the apparatus for executing the web searching method, thus, the network environment also can be constituted only by the plurality of client devices 2 and the web server 3.

The client devices 2 may include, but is not limited to, smart phones, personal digital assistants (PDA), notebooks, and desktops. Each of the client devices 2 includes a web browser which can be pointed at a website associated with a search engine to request web pages containing information related to search keywords from the web server 3.

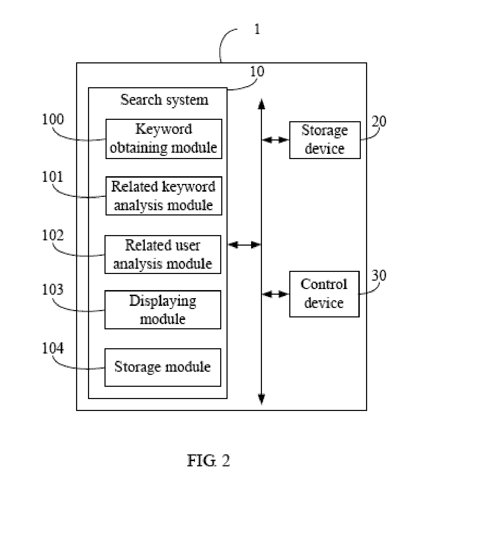

FIG. 2 is a block diagram of one embodiment of the application server 1, which is the apparatus that executes the web searching method. In one embodiment, the application server 1 includes a search system 10, a storage device 20, and a control device 30. The application server 1 may be configured in numbers of other ways and may include other or different components.

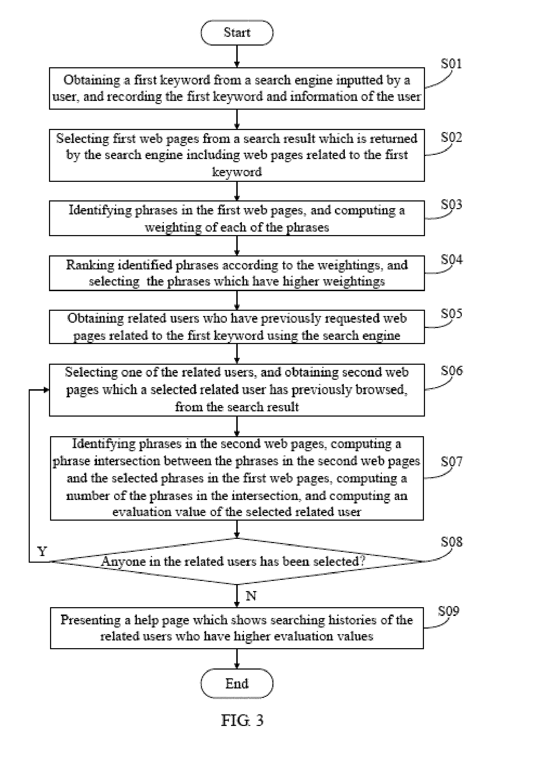

The search system 10 includes a plurality of function modules, such as a keyword obtaining module 100, a related keyword analysis module 101, a related user analysis module 102, a displaying module 103, and a storage module 104. The function modules 100-104 may include computerized codes in the form of one or more programs, which provide at least the functions needed to execute the steps illustrated in FIG. 3.

The storage device 20 may include some type(s) of non-transitory computer-readable storage medium, such as a hard disk drive, a compact disc, a digital video disc, or a tape drive. The storage device 20 stores the computerized codes of the function modules of the search system 10.

The control device 30 may be a processor, an application-specific integrated circuit (ASIC), or a field programmable gate array, (FPGA) for example. The control device 30 may execute the computerized codes of the function modules of the search system 10 to realize the functions of the search system 10.

FIG. 3 illustrates a flowchart of one embodiment of the web searching method. The method is executed by at least one processor of an electronic device, for example, the control device 30 of the application server 1. Depending on the embodiment, additional steps in FIG. 3 may be added, others removed, and the ordering of the steps may be changed.

In step S01, the keyword obtaining module 100 obtains a keyword (hereinafter referred to as the first keyword) from a search engine of one of the client devices 2 operated by a user, and the storage module 104 records the first keyword and information of the user into the storage device 20. The information of the user may be a username of the user, an Internet Protocol (IP) address of the client device 2 of the user, and other information. In one embodiment, when a user A opens a website associated with a search engine using a client 2, and inputs a keyword, such as "computer" into the search engine, the keyword obtaining module 100 obtains the keyword "computer," and then the storage module 104 records the keyword "computer" and the user A into the storage device 20.

When the search engine returns a search result including a plurality of web pages related to the first keyword, in step S02, the related keyword analysis module 101 selects a number of first web pages from the search result. The number of the first web pages may be N, where N is a positive integer.

In step S03, the related keyword analysis module 101 identifies phrases appearing in the first web pages, and computes a weighting of each of the phrases in the first web pages. The phrases may be single words, for example, "computer," "network," and so on, or may be compound words, for example "computer network," "authorized user" and so on. In one embodiment, the weighting of each of the phrases is computed using a weighting algorithm, such as term frequency-inverse document frequency (tf-idf) algorithm. The tf-idf algorithm is a numerical statistic which reflects how important a phrase is to a document in a collection or corpus. The tf-idf value increases proportionally to the number of times a word appears in the document, but is offset by the frequency of the word in the corpus, which alleviates the fact that some words are used more commonly. For example, when a number of phrases appearing in a single web page is 100, and a phrase "computer" appears 3 times in this single web page, then the term frequency (tf) value of the phrase "computer" in the webpage is 3/100, namely 0.03. However, when the phrase "computer" appears in 1,000 web pages, and a number of total web pages is 10,000,000, then the inverse document frequency (idf) of the phrase "computer" is log (10,000,000/1,000), namely 4. Thus, the weighting of the phrase "computer" in the total web pages is 0.03*4, namely 0.12.

In step S04, the related keyword analysis module 101 ranks the identified phrases according to the weightings, and selects one or more of the phrases which have higher weightings. In one embodiment, a number of the selected phrases is R, where R is a positive integer.

In step S05, the related user analysis module 102 obtains related users who have previously requested web pages related to the first keyword using the search engine. For example, the first keyword inputted into the search engine by the user is "computer", the related user analysis module 102 obtains other users who have previously inputted "computer" into the search engine before, all such users being considered as the related users. As mentioned above in step S01, when a user inputs a keyword into the search engine, the keyword obtaining module 100 obtains and records this keyword and the user into the storage device 20, thus the related user analysis module 102 can obtain the related users according to records in the storage device 20.

In step S06, the related user analysis module 102 selects one of the related users, and obtains a number of second web pages which a selected related user has previously browsed, from the search result returned according to the first keyword. The number of the second web pages may be M, where M is a positive integer. In one embodiment, when a user browses a web page by clicking a website of the web page, the web page can be marked with an tag indicating the user has previously browsed. The tag may include, such as "user A, true" indicating the user A has previously browsed this web page.

In step S07, the related user analysis module 102 identifies phrases appearing in the second web pages, computes a phrase intersection between the phrases of the second web pages and the selected phrases of the first web pages, computes a number of the phrases in the phrase intersection, and computes an evaluation value of the selected related user according to the number of the selected phrases and the number of the phrases in the phrase intersection. In one embodiment, the evaluation value equals S over R, (V=S/R), where S is the number of the phrases in the phrase intersection and R is the number of the selected phrases.

In step S08, the related user analysis module 102 determines if anyone in the related users has not been selected. The process goes back to step 06 when anyone in the related users has not been selected. Otherwise, the process goes to step S09 when all the related users have been selected.

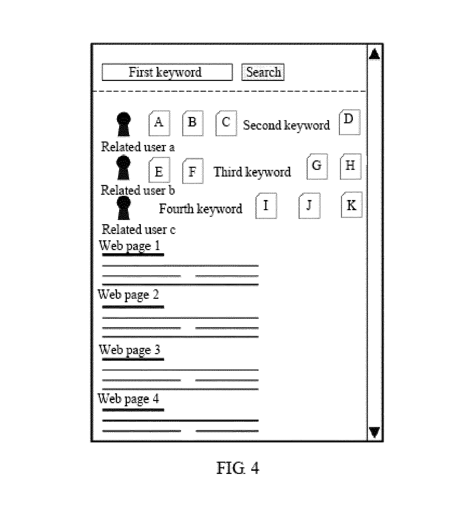

In step S09, the displaying module 103 presents a help page which shows searching histories of the related users who have higher evaluation values. Referring to FIG. 4, an example is shown illustrating a help page which shows search histories of the related users. Using the help page, it can be known that, the related users who have higher evaluation values include a related user "a", a related user "b", and a related user "c". The related user "a" has previously browsed a web page A, a web page B, and a web page C from the search result returned according to the first keyword. In addition, the related user "a" has further browsed a web page D from a search result returned according to a second keyword, where the second keyword may be a synonym of the first keyword. Similar, the related user "b" has previously browsed a web page E, and a web page F from the search result returned according to the first keyword. In addition, the related user "b" has further browsed a web page E and a web page F from a search result returned according to a third keyword, where the third keyword may also be a synonym of the first keyword. Furthermore, the help page also shows other web pages returned according to the first keyword, such as web page 1, web page 2, web page 3, web page 4, and so on.

While specific embodiments of the invention have been described above, it is to be understood that the embodiments described herein can be implemented in hardware, software, firmware, middleware, microcode, or any combination thereof. For example, the invention may take the form of a computer program containing one or more sequences of machine-readable instructions which, when executed by a computer, causes the computer to perform one or more method described above.

When the embodiments are implemented in software, firmware, middleware or microcode, program code or code segments, they can be stored in a machine-readable medium, such as a storage component. The term "machine-readable medium" can include, without being limited to, wireless channels and various other media capable of storing, containing, and/or carrying instruction(s) and/or data. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. All of the processes described above may be embodied in, and fully automated via, functional code modules executed by one or more general purpose electronic devices or processors. The code modules may be stored in any type of non-transitory machine-readable medium or other storage device. Some or all of the methods may alternatively be embodied in specialized hardware. Depending on the embodiment, the non-transitory machine-readable medium may be a hard disk drive, a compact disc, a digital video disc, a tape drive or other suitable storage medium.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A web searching method, the method being executed by at least one processor of an electronic device, the method comprising:
obtaining a keyword from a search engine inputted by a user;
selecting first web pages from a search result including a plurality of web pages related to the keyword returned by the search engine;
identifying phrases appearing in the first web pages, and computing a weighting of each of the phrases in the first web pages;
ranking the identified phrases according to the weights, and selecting one or
more of the phrases which have higher weights;
obtaining related users who have previously requested web pages related to the keyword using the search engine;
selecting one of the related users in turn, obtaining second web pages which the selected related user has previously browsed from the search result returned according to the keyword;
identifying phrases appearing in the second web pages, computing a phrase intersection between the phrases from the second web pages and selected phrases from the first web pages, computing a number of the phrases in the phrase intersection, and computing an evaluation value of the selected related user according to the number of the selected phrases and the number of the phrases in the phrase intersection; and
presenting a help page which shows searching histories of the related users who have higher evaluation values.

2. The method according to claim 1, wherein the keyword and the user are recorded into a storage device.

3. The method according to claim 1 or 2, wherein the first web pages are selected from the search result.

4. The method according to claim 1, 2 or 3, wherein the weighting of each of the phrases is computed using a term frequency-inverse document frequency (tf-idf) algorithm.

5. The method according to any preceding claim, wherein the evaluation value is computed by V=S/R, wherein V is the evaluation value, S is the number of the phrases in the phrase intersection and R is the number of the selected phrases.

6. The method according to any preceding claim, wherein the help page comprises information of keywords having been inputted into the search engine and web pages having been browsed by the related users with higher evaluation values.

7. An apparatus that executes a web searching method, comprising:
a control device; and
a storage device storing one or more programs which when executed by the control device, causes the processing device to:
obtain a keyword from a search engine inputted by a user;
select first web pages from a search result including a plurality of web pages related to the keyword returned by the search engine;
identify phrases appearing in the first web pages, and compute a weighting of each of the phrases in the first web pages;
rank the identified phrases according to the weights, and select one or more of the phrases which have higher weights;
obtain related users who have previously requested web pages related to the keyword using the search engine;
select one of the related users in turn, obtaining second web pages which the selected related user has previously browsed from the search result returned according to the keyword;
identify phrases appearing in the second web pages, compute a phrase intersection between the phrases from the second web pages and selected phrases from the first web pages, compute a number of the phrases in the phrase intersection, and compute an evaluation value of the selected related user according to the number of the selected phrases and the number of the phrases in the phrase intersection; and
present a help page which shows searching histories of the related users who have higher evaluation values.

8. The apparatus according to claim 7, wherein the keyword and the user are recorded into the storage device.

9. The apparatus according to claim 7 or 8, wherein the first web pages are selected from the search result.

10. The apparatus according to claim 7, 8 or 9, wherein the weighting of each of the phrases is computed using a term frequency-inverse document frequency (tf-idf) algorithm.

11. The apparatus according to any of claims 7 to 10, wherein the evaluation value is computed by V=S/R, wherein V is the evaluation value, S is the number of the phrases in the phrase intersection and R is the number of the selected phrases..

12. The apparatus according to any of claims 7 to 11, wherein the help page comprises information of keywords having been inputted into the search engine and web pages having been browsed by the related users with higher evaluation values.

13. A storage medium having stored thereon instructions that, when executed by a processor of an electronic device, causes the processor to perform a web searching method as claimed in any of claims 1 to 6.
